# EUROPEAN PATENT APPLICATION

(11) **EP 2 209 064 A1**
(43) Date of publication of application: **21.07.2010**
(21) Application number: 09179550.0
(22) Date of filing: 17.12.2009
(51) Int. Cl.: G06F 3/044

(54) **Touch screen panel and method of fabricating the same**

(30) Priority: 16.01.2009 KR 20090003634
(71) Applicant: Samsung Mobile Display Co., Ltd., Yongin-City Gyunggi-do (KR)
(72) Inventor: Kang, Sung-Ku, Chungcheongnam-do (KR); Jung, Tae-Hyeong, Chungcheongnam-do (KR); Kim, Jin-Guen, Chungcheongnam-do (KR)
(74) Representative: Gulde Hengelhaupt Ziebig & Schneider

(57) **Abstract**

A touch screen panel for an image display device and a method of fabricating the same. The touch screen panel includes: a transparent substrate (10); a plurality of first (12a) and second (12b) sensing patterns on one side of the transparent substrate (10), the first sensing patterns (12a) coupled to one another along a first direction, and the second sensing patterns (12b) positioned between the first sensing patterns including patterns separated from one another; a first insulating layer (13) on the first (12a) and second (12b) sensing patterns, the first insulating layer (13) having a plurality of contact holes (CH), and the contact holes (CH) exposing portions of the second sensing patterns (12b); and connecting patterns (14) on the first insulating layer (13), the connecting patterns (14) coupling the second sensing patterns (12b) to one another along the second direction through the contact holes (CH). In the touch screen panel, the first insulating layer (13) is formed of a transparent photoresist.

## Description

### BACKGROUND OF THE INVENTION

### 1. Field of the Invention

The present invention relates to a touch screen panel for an image display device or the like and a method of fabricating the same.

### 2. Description of Related Art

A touch screen panel is an input device that allows a user's instruction to be inputted to an image display device or the like by selecting an instruction content displayed on a screen of the image display device with a user's finger or an object.

To this end, a touch screen panel is provided on a front side of an image display device, and a contact position on the touch screen panel is converted into an electrical signal. At the contact position, a user's finger or an object is directly in contact with the touch screen panel. Accordingly, an instruction content selected at the contact position is inputted as an input signal to the image display device.

The applications for a touch screen panel have gradually expanded because it can be used to operate an image display device and replace a separate input device (e.g., keyboard or mouse) connected to the image display device.

Touch screen panels are classified into a resistive overlay type touch screen panel, an infrared beam type touch screen panel, a capacitive overlay type touch screen panel, and the like.

Among the above-described types of touch screen panels, a contact position on the capacitive overlay type touch screen panel is converted into an electrical signal by sensing a change in capacitance formed between a conductive sensing pattern and another sensing pattern adjacent to the conductive sensing pattern, a ground electrode or the like when a user's finger or an object is in contact with the touch screen panel.

It will be apparent that preventing or reducing damage of the sensing patterns can improve reliability of the capacitive overlay type touch screen panel.

However, the sensing patterns may be damaged, resulting in a disconnection or the like during the fabrication process and causing a failure. Therefore, a contact position on the touch screen panel may not be reliably sensed.

### SUMMARY OF THE INVENTION

Accordingly, it is an aspect of embodiments of the present invention to provide a touch screen panel capable of preventing or reducing damage to sensing patterns during fabrication and a method of fabricating the same.

According to an embodiment of the present invention, there is provided a touch screen panel including a transparent substrate; a plurality of first and second sensing patterns on one side of the transparent substrate, the first sensing patterns coupled to one another along a first direction, and the second sensing patterns positioned between the first sensing patterns and including patterns separated from one another; a first insulating layer on the first and second sensing patterns, the first insulating layer having a plurality of contact holes, and the contact holes exposing portions of the second sensing patterns; and connecting patterns on the first insulating layer, the connecting patterns coupling the second sensing patterns to one another along the second direction through the contact holes, wherein the first insulating layer is formed of a transparent photoresist.

The photoresist may include an organic photoresist including at least one of an acryl-based photoresist, a polyimide-based photoresist or a siloxane-based photoresist.

The touch screen panel may further include a second insulating layer on the connecting patterns. The second insulating layer may be formed of a transparent insulating material including at least one of SiO₂, TiO₂ or ZrO₂.

The touch screen panel may further include a transparent ground electrode on the other side of the transparent substrate. The touch screen panel may further include a third insulating layer on the transparent ground electrode. The third insulating layer may be formed of a transparent insulating material including at least one of SiO₂, TiO₂ or ZrO₂.

According to another embodiment of the present invention, there is provided a method of fabricating a touch screen panel, which includes forming a transparent electrode layer on one side of a transparent substrate and then patterning the transparent electrode layer, thereby forming a plurality of first sensing patterns coupled to one another along a first direction and a plurality of second sensing patterns between the first sensing patterns, the second sensing patterns including patterns separated from one another; forming a first insulating layer of a transparent photoresist on the first and second sensing patterns; forming a plurality of contact holes in the first insulating layer using a photolithography process, the contact holes exposing portions of the second sensing patterns; and forming connecting patterns on the first insulating layer, the connecting patterns coupling the second sensing patterns to one another along the second direction through the contact holes.

According to embodiments of the present invention, an insulating layer is formed of a photoresist and includes contact holes for sensing patterns to be connected therethrough, and the contact holes are formed using a photolithography process, thereby preventing or reducing the likelihood of damaging the sensing patterns in a fabrication process.

### BRIEF DESCRIPTION OF THE DRAWINGS

The accompanying drawings, together with the specification, illustrate exemplary embodiments of the present invention, and, together with the description, serve to explain the principles of the present invention.

FIG. 1 is a schematic plan view showing a touch screen panel according to an embodiment of the present invention.

FIG. 2 is a schematic cross-sectional view of a main section of the touch screen panel shown in FIG. 1.

FIGS. 3A, 3B, 3C, 3D, 3E and 3F are schematic cross-sectional views sequentially illustrating a method of fabricating the touch screen panel shown in FIG. 2.

### DETAILED DESCRIPTION OF EXEMPLARY EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements.

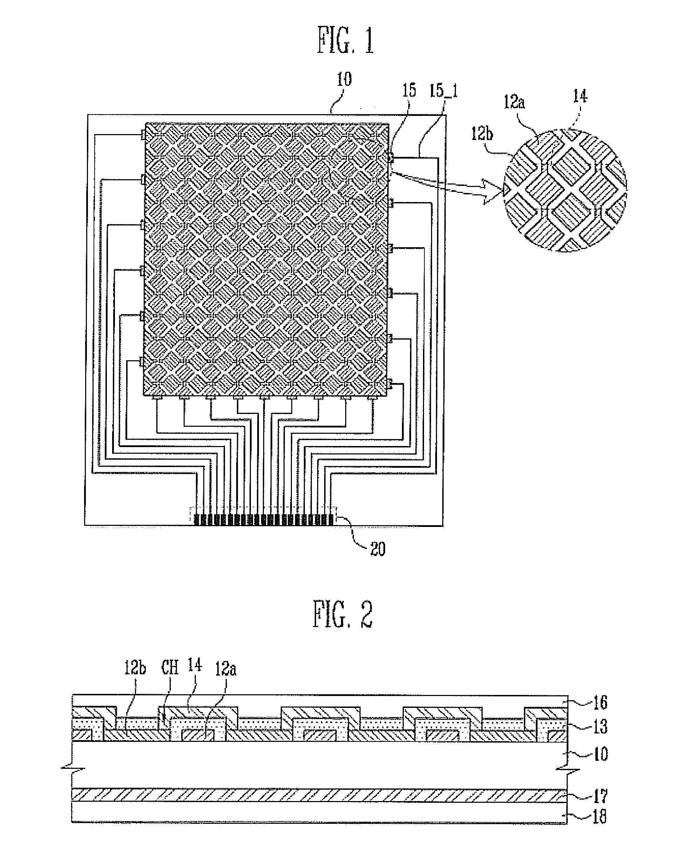

FIG. 1 is a plan view schematically showing a touch screen panel according to an embodiment of the present invention.

Referring to FIG. 1, the touch screen panel according to the embodiment of the present invention includes a plurality of sensing patterns 12a and 12b formed on a transparent substrate 10, and a plurality of metal patterns 15 through which the sensing patterns 12a and 12b are electrically connected to position detecting lines 15_1.

The sensing patterns 12a and 12b are formed on a surface, e.g., an upper surface of the transparent substrate 10. The sensing patterns 12a and 12b include first sensing patterns 12a formed as connected along a first direction, and second sensing patterns 12b formed between the first sensing patterns 12a. The second sensing patterns 12b are formed as separated from one another and connected along a second direction by separate connecting patterns 14.

The sensing patterns 12a and 12b are formed close to one another in a regular pattern such as a pattern of diamond shapes. The pattern of the sensing patterns 12a and 12b is not limited to the pattern of diamond shapes but may be formed in various other suitable patterns.

In addition, the first and second directions are different directions crossing each other. The first direction may be set as a Y-axis direction, and the second direction may be set as an X-axis direction perpendicular to the Y-axis direction.

The first sensing patterns 12a are formed as connected along the first direction. For example, when the first sensing patterns 12a are formed, first sensing patterns 12a positioned on the same column may be connected to one another along the Y-axis direction. Here, the first sensing patterns 12a may be patterned as connected along the first direction in the patterning process.

The first sensing patterns 12a connected in columns are connected to the position detecting lines 15_1 through the metal patterns 15.

The second sensing patterns 12b are formed from the same layer of a material as that of the first sensing patterns 12a and are formed between the first sensing patterns 12a. The sensing patterns 12b are separated from one another. However, the second sensing patterns 12b may be formed to be electrically connected along the second direction by the separate connecting patterns 14. For example, the second sensing patterns 12b may be formed to have individual patterns in the patterning process, and second sensing patterns 12b positioned on the same row may be connected to one another along the X-axis direction by the connecting patterns 14 in a subsequent process.

The second sensing patterns 12b connected in rows are connected to the position detecting lines 15_1 through the metal patterns 15.

The metal patterns 15 are positioned at edge portions of the touch screen panel while avoiding contact surfaces on which an image is displayed. The metal patterns 15 may be formed of a low-resistance material such as Ag or Mo/Al/Mo.

The metal patterns 15 electrically connect the sensing patterns 12a or 12b to the position detecting lines 15_1 so that a change in capacitance at a contact position is provided to a suitable driving circuit.

For example, the metal patterns 15 may electrically connect the first sensing patterns 12a connected in columns and the second sensing patterns 12b connected in rows to the respective position detecting lines 15_1.

To this end, the metal patterns 15 are connected to first and second sensing patterns 12a and 12b at edge portions of a region in which the first and second sensing patterns 12a and 12b are positioned, and electrically connect the first and second sensing patterns 12a and 12b to the position detecting lines 15_1.

The position detecting lines 15_1 are connected to the respective first and second sensing patterns 12a and 12b through the metal patterns 15 so that the first and second sensing patterns 12a and 12b are connected to a suitable driving circuit. For example, when the touch screen panel is connected to an external driving circuit through a pad unit 20, the position detecting lines 15_1 are connected between the pad unit 20 and the sensing patterns 12a and 12b.

Although it has been described in the above embodiment that the metal patterns 15 and the position detecting lines 15_1 are separate individual components, the present invention is not limited thereto. For example, the metal patterns 15 and the position detecting lines 15_1 may be integrally formed together using the same material in the same process.

The touch screen panel described above is a capacitive overlay type touch screen panel. If a user's finger or a contact object such as a touch stick (or stylus) is in contact with the touch screen panel, a change in capacitance at the contact position is provided to the driving circuit via the metal patterns 15, position detecting lines 15_1 and the pad unit 20 from the sensing patterns 12a and 12b. The change in capacitance is converted to an electric signal by suitable X and Y input processing circuits and the like, thereby detecting the contact position.

As described above, in the touch screen panel according to the described embodiment of the present invention, the first and second sensing patterns 12a and 12b are formed from a same layer of material. Accordingly, the entire touch screen panel has a substantially uniform reflectance.

FIG. 2 is a schematic cross-sectional view of a main section of the touch screen panel shown in FIG. 1. For convenience of illustration, only a touch region having sensing patterns formed therein is shown in FIG. 2.

Referring to FIG. 2, the touch screen panel includes a transparent substrate 10; first and second sensing patterns 12a and 12b, a first insulating layer 13, connecting patterns 14 and a second insulating layer 16, which are sequentially formed on one surface of the transparent substrate 10; and a transparent ground electrode 17 and a third insulating layer 18, which are sequentially formed on the other surface of the transparent substrate 10.

Further, the touch region is transparent so that light emitted from a display panel below the touch screen panel can be transmitted through the touch region. That is, the first and second sensing patterns 12a and 12b, the first insulating layer 13, the connecting patterns 14, the second insulating layer 16, the transparent ground electrode 17 and the third insulating layer 18 are all formed of a transparent material. Here, the term "transparency" (or "transparent") comprehensively refers to transparency having a high light transmittance, in addition to 100% transparency.

To this end, the first and second sensing patterns 12a and 12b, the connecting patterns 14 and the transparent ground electrode 17 are formed of a transparent electrode material such as indium tin oxide (hereinafter referred to as ITO), and the first to third insulating layers 13, 16 and 18 are formed of a suitable transparent insulating material.

In addition, although not shown in the schematic cross-sectional view of FIG. 2, the first sensing patterns 12a are patterned as connected along the first direction. The second sensing patterns 12b are patterned as patterns separated from one another between the first sensing patterns 12a.

The first insulating layer 13 is formed on the first and second sensing patterns 12a and 12b, and a plurality of contact holes CH are formed in the first insulating layer 13 so that portions of the second sensing patterns 12b are exposed therethrough.

Further, in the described embodiment of the present invention, the first insulating layer 13 is formed of a suitable transparent photoresist so as to prevent the sensing patterns 12a and 12b formed below the first insulating layer 13, particularly the second sensing patterns 12b, from being damaged in a fabrication process. Here, the photoresist may include organic photoresists such as acryl-based, polyimide-based and siloxane-based photoresists. However, the present invention is not limited thereto. Various suitable types of photoresists may be used to form the first insulating layer 13 having a transparency within a suitable range.

As described above, if the first insulating layer 13 is formed of a photoresist, the contact holes CH through which the portions of the second sensing patterns 12b are exposed can be formed using a photolithography process.

If the contact holes CH are formed using the photolithography process, it may prevent or reduce problems that may occur in a dry etching process and the like, e.g., damage occurring during etching the second sensing patterns 12b together with the contact holes CH. Accordingly, it is possible to effectively prevent or reduce a failure due to disconnection of the sensing patterns or the like by preventing or reducing the likelihood of damaging the second sensing patterns 12b in the fabrication process. The connecting patterns 14 are formed on the first insulating layer 13 and electrically connect the second sensing patterns 12b along the second direction through the contact holes CH formed on the first insulating layer 13.

The second insulating layer 16 is formed on the connecting patterns 14 to protect the layers below. The second insulating layer 16 may be formed of various suitable transparent organic/inorganic insulating materials. For example, the second insulating layer 16 may be formed of a transparent inorganic insulating material containing at least one of SiO₂, TiO₂ or ZrO₂.

The transparent ground electrode 17 is formed on the other surface, e.g., a lower surface of the transparent substrate 10. The transparent ground electrode 17 may be used to secure stability between the touch screen panel and the display panel. The transparent ground electrode 17 may also be used to form capacitances with the first and second sensing patterns 12a and 12b, depending on a design of the touch screen panel.

That is, in the capacitive overlay type touch screen panel, capacitance between the first and second sensing patterns 12a and 12b may be utilized to sense a touch at the contact position. Alternatively, capacitance between the first and second sensing patterns 12a and 12b and the transparent ground electrode 17 may be utilized to sense a touch at the contact position. However, the capacitance for sensing a touch may be variously modified.

The third insulating layer 18 is formed on the transparent ground electrode 17 so as to protect the transparent ground electrode 17. Here, the third insulating layer 18 may be formed of various suitable transparent organic/inorganic insulating materials having transparency. For example, the third insulating layer 18 may be formed of a suitable transparent inorganic insulating material containing at least one of SiO₂, TiO₂ or ZrO₂. In addition, the composition ratio of the second and third insulating layers 16 and 18 may be controlled to maximize or increase the difference of light transmittances or reflectances between the second and third insulating layers 16 and 18. For the above-described maximized design of the touch screen panel according to an embodiment of the present invention, at least one of the second and third insulating layers 16 and 18 may be omitted.

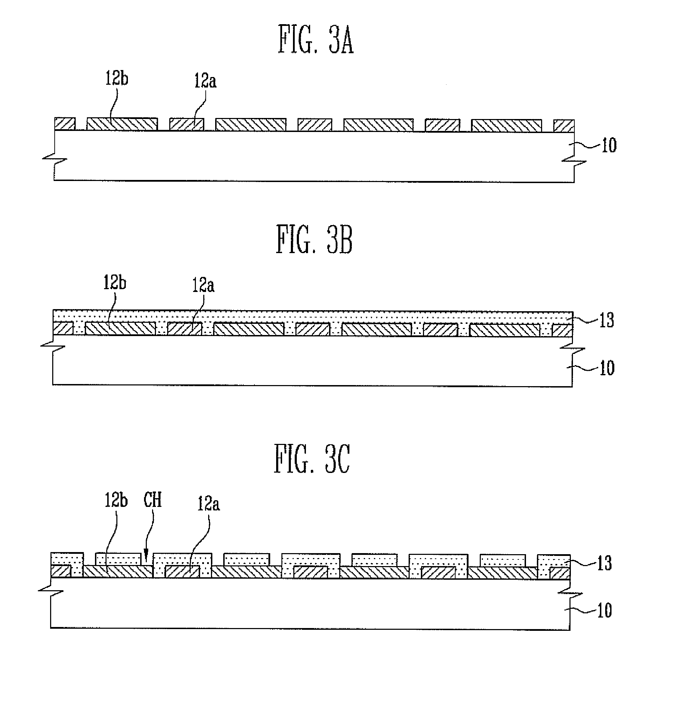

FIGS. 3A to 3F are schematic cross-sectional views sequentially illustrating a method of fabricating the touch screen panel shown in FIG. 2.

The method of fabricating the touch screen panel according to an embodiment of the present invention will be described with reference to FIGS. 3A to 3F. First, as shown in FIG. 3A, a transparent electrode material such as ITO is formed on one surface of a transparent substrate 10 and then patterned, thereby forming first and second sensing patterns 12a and 12b. Here, the first sensing patterns 12a are patterned as connected along a first direction, and the second sensing patterns 12b are formed between the first sensing patterns 12a as patterns separated from one another.

After the first and second sensing patterns 12a and 12b are formed, metal patterns and/or position detecting lines may be formed to be connected to the first and second sensing patterns 12a and 12b.

Thereafter, as shown in FIG. 3B, a first insulating layer 13 is formed by coating a suitable transparent photoresist on the first and second sensing patterns 12a and 12b. As described above, the transparent photoresist may include various suitable organic photoresists such as acryl-based, polyimide-based and siloxane-based photoresists. Thereafter, as shown in FIG. 3C, a plurality of contact holes CH having portions of the second sensing patterns 12b exposed therethrough are formed in the first insulating layer 13 using a suitable photolithography process including exposure and development processes.

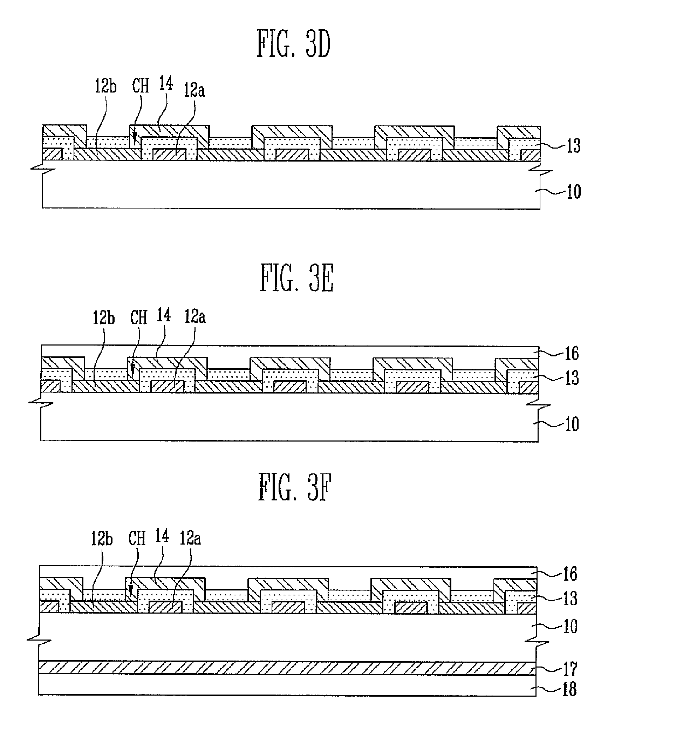

Thereafter, as shown in FIG. 3D, a suitable transparent electrode material such as ITO is formed on the first insulating layer 13 and then patterned, thereby forming connecting patterns 14. The connecting patterns 14 are formed to electrically connect the second sensing patterns 12b to one another along the second direction through the contact holes CH formed on the first insulating layer 13.

Thereafter, as shown in FIG. 3E, a second insulating layer 16 is formed by forming a suitable transparent insulating material on the connecting patterns 14.

Thereafter, as shown in FIG. 3F, a transparent ground electrode 17 is formed by forming a suitable transparent electrode material such as ITO on the other surface of the transparent substrate 10. Then, a third insulating layer 18 is formed by forming a suitable transparent insulating material on the transparent ground electrode 17.

As described above, in the method of fabricating the touch screen panel, the first insulating layer 13 is formed of a photoresist, and the contact holes CH formed in the first insulating layer 13 so as to expose the portions of the second sensing patterns 12b are formed using a photolithography process.

If the contact holes CH are formed using the photolithography process, it may prevent or reduce the second sensing patterns 12b exposed by the contact holes CH from being damaged in the process of forming the contact holes CH. Accordingly, a failure of the touch screen panel may be reduced or prevented. Further, the photolithography process is performed at a relatively low cost. Since the photolithography process is continuously performed after the first insulating layer 13 is formed, fabrication efficiency can be improved.

## Claims

1. A touch screen panel comprising:
a transparent substrate (10);
a plurality of first (12a) and second (12b) sensing patterns on one side of the transparent substrate (10), the first sensing patterns (12a) coupled to one another along a first direction, and the second sensing patterns (12b) positioned between the first sensing patterns (12a) and comprising patterns separated from one another;
a first insulating layer (13) on the first (12a) and second (12b) sensing patterns, the first insulating layer (13) having a plurality of contact holes (CH), and the contact holes (CH) exposing portions of the second sensing patterns (12b); and
connecting patterns (14) on the first insulating layer (13), the connecting patterns (14) coupling the second sensing patterns (12b) to one another along the second direction through the contact holes (CH),
wherein the first insulating layer (13) is formed of a transparent photoresist.

2. The touch screen panel of claim 1, wherein the photoresist comprises an organic photoresist including at least one of an acryl-based photoresist, a polyimide-based photoresist or a siloxane-based photoresist.

3. The touch screen panel of any one of the preceding claims, further comprising a second insulating layer (16) on the connecting patterns (14).

4. The touch screen panel of claim 3, wherein the second insulating layer (16) is formed of a transparent insulating material including at least one of SiO₂, TiO₂ or ZrO₂.

5. The touch screen panel of any one of the preceding claims, further comprising a transparent ground electrode (17) on the other side of the transparent substrate (10).

6. The touch screen panel of claim 5, further comprising a third insulating layer (18) on the transparent ground electrode (17).

7. The touch screen panel of claim 6, wherein the third insulating layer (18) is formed of a transparent insulating material including at least one of SiO₂, TiO₂ or ZrO₂.

8. The touch screen panel of any one of the preceding claims, wherein the first (12a) and second (12b) sensing patterns and the connecting patterns (14) are formed of a transparent electrode material.

9. A method of fabricating a touch screen panel, the method comprising:
forming a transparent electrode layer on one side of a transparent substrate (10) and then patterning the transparent electrode layer, thereby forming a plurality of first sensing patterns (12a) coupled to one another along a first direction and
a plurality of second sensing patterns (12b) between the first sensing patterns (12a), the second sensing patterns (12b) comprising patterns separated from one another;
forming a first insulating layer (13) of a transparent photoresist on the first (12a) and second (12b) sensing patterns;
forming a plurality of contact holes (CH) in the first insulating layer (13) using a photolithography process, the contact holes (CH) exposing portions of the second sensing patterns (12b); and
forming connecting patterns (14) on the first insulating layer (13), the connecting patterns (14) coupling the second sensing patterns (12b) to one another along the second direction through the contact holes (CH).

10. The method of claim 9, wherein the transparent photoresist comprises an organic photoresist including at least one of an acryl-based photoresist, a polyimide-based photoresist and a siloxane-based photoresist.

11. The method of any one of claims 9 to 10, further comprising forming a second insulating layer (16) on the connecting patterns (14).

12. The method of any one claims 9 to 11, further comprising forming a transparent ground electrode (17) on the other side of the transparent electrode.

13. The method of claim 12, further comprising forming a third insulating layer (18) on the transparent ground electrode (17).
